# EUROPÄISCHE PATENTSCHRIFT

(11) **EP 0 354 338 B1**
(45) Veröffentlichungstag und Bekanntmachung des Hinweises auf die Patenterteilung: **10.02.1993**
(21) Anmeldenummer: 89111851.5
(22) Anmeldetag: 29.06.1989
(51) Int. Cl.: C01B 25/30, C01B 25/41, C01B 25/027

(54) **Verfahren zur Aufarbeitung von Stäuben, die bei der elektrothermischen Phosphorherstellung anfallen**
Method for treating dust formed in the electrothermal preparation of phosphorus
Procédé de traitement des poussières, qui se forment lors de la fabrication électrothermique du phosphore

(30) Priorität: 09.08.1988 DE 3826981
(43) Veröffentlichungstag der Anmeldung: 14.02.1990
(73) Patentinhaber: HOECHST AKTIENGESELLSCHAFT, 65926 Frankfurt am Main (DE)
(72) Erfinder: Kolkmann, Friedrich, Dr., D-5040 Brühl (DE); Schimmel, Günther, Dr., D-5042 Erftstadt (DE); Scheffer, Johannes, NL-4382 BZ Vlissingen (NL)

(56) Entgegenhaltungen:
- EP-A- 0 014 755
- EP-A- 0 074 556
- EP-A- 0 266 597
- CHEMICAL ABSTRACTS, vol. 97, no. 20, 15 November 1982 Columbus, Ohio, USA Seite 147; ref. no. 165444P & SU-A-945066 (LENINGRAD SC.R.INST.) (23-07-82)
- CHEMICAL ABSTRACTS, vol. 92, no. 6, 11 Februar 1980 Columbus, Ohio, USA Seite 121; ref. no. 44034T & JP-A-54094498 (CHISSO CORP.) (26-07-79)

## Beschreibung

Die vorliegende Erfindung betrifft ein Verfahren zur Aufarbeitung von Stäuben, die aus dem bei der elektrothermischen Herstellung von gelbem Phosphor anfallenden, im wesentlichen aus Kohlenmonoxid und Phosphordampf bestehenden Gasgemisch elektrostatisch abgeschieden wurden.

Unter den reduzierenden Bedingungen eines elektrothermischen Phosphorofens verlassen die mit dem Rohphosphat, Koks und Kies eingebrachten metallischen Verunreinigungen elementar oder als flüchtige Oxide zusammen mit dem Kohlenmonoxid und Phosphordampf den Phosphorofen. Zur Reinigung dieses Phosphordampfgemisches werden die Verun - reinigungen in Elektro-Abscheidern, insbesondere in solchen nach Cottrell, elektrostatisch abgeschieden und als sog. Cottrell-Staub ausgetragen.

Die Cottrell-Stäube enthalten neben Phosphor und seinen Verbindungen auch Zink, Cadmium, Kupfer, Blei und Kalium.

Gemäß der US-A- 4 537 756 kann Cottrell-Staub ausgeschleust und nach einer Verarbeitung deponiert werden. Cottrell-Staub kann aber auch gemeinsam mit neuen Einsatzstoffen in den Phosphorofen zur wirtschaftlichen Nutzung seines Gehaltes an Phosphor und Phosphorverbindungen rückgeführt werden, wobei jedoch die Rückführung des Staubes zu einer Anreicherung der metallischen Verunreinigungen führt, durch die sowohl der Betrieb des Phosphorofens als auch der nachgeschalteten Elektroabscheider negativ beeinflußt werden.

Die EP-A- 0 266 597 ist eine Fortentwicklung der Arbeitsweise der US-A- 4 537 756. Die Stäube werden in einem ersten Schritt oxidierend bei 300 bis 800°C calciniert. Das Calcinat wird in einem weiteren Schritt bei 950 bis 1200°C mit Kohlenstoff behandelt und dabei die metallischen Verunreinigungen der Stäube verflüchtigt und so aus dem Staub ausgeschleust. Der Rückstand, bestehend aus Silikaten und Phosphaten, kann dann in den Phosphorofen als Möller rückgeführt werden.

Nachteilig bei diesem Verfahren ist der hohe technische Aufwand, der auch noch einen hohen Energieaufwand bedingt.

Es war daher die Aufgabe gestellt, die bei der Phosphorproduktion anfallenden Stäube so aufzuarbeiten, daß nur geringe Deponie-Mengen anfallen, die in den Stäuben vorhandenen Phosphorverbindungen wirtschaftlich genutzt werden und keine Abwässer anfallen.

Das wird erfindungsgemäß dadurch erreicht, daß die Stäube in einem ersten Schritt bei 300 bis 800°C unter oxidierenden Bedingungen in ein Calcinat überführt werden, in einem zweiten Schritt das Calcinat mit Phosphorsäure gelaugt wird, in einem dritten Schritt die phosphorsaure Lösung mit Natronlauge auf einen pH-Wert von 0 bis 1,5 eingestellt wird, in einem vierten Schritt aus der teilweise neutralisierten phosphorsauren Lösung durch Zugabe von Sulfid die Sulfide des Bleis, Kupfers und Cadmiums ausgefällt und abfiltriert werden, in einem fünften Schritt diese filtrierte, teilweise neutralisierte phosphorsaure Lösung mit Natronlauge auf einen pH-Wert von ca. 1,5 bis 5,0 eingestellt wird und, gegebenenfalls unter Zugabe weiterer Sulfidmengen, Zinksulfid ausgefällt und abfiltriert wird, in einem sechsten Schritt die Natriumphosphatlösung, gegebenenfalls nach Austreiben überschüssigen Sulfids, mit Natronlauge weiter neutralisiert und von ausgefallenen Calciumverbindungen abgetrennt wird, und die resultierende Natriumphosphatlösung in dieser Form in bekannter Weise zur Herstellung von Natriumphosphatsalzen verwendet wird. Das Verfahren gemäß der Erfindung kann weiterhin wahlweise auch noch dadurch ausgestaltet sein, daß
a) das Calcinat der Stäube mit durch Phosphorverbrennung gewonnener Phosphorsäure oder entsulfatisierter Naßphosphorsäure mit 10 bis 54 Gew%, vorzugsweise 25 bis 35 Gew% P₂O₅ in der 5 bis 20-fachen, vorzugsweise 10 bis 15-fachen Gewichtsmenge gelaugt wird;
b) das Calcinat mit der Phosphorsäure bei 20 bis 100°C, vorzugsweise 70 bis 80°C, innerhalb von 0,5 bis 4 Stunden, vorzugsweise 2 bis 3 Stunden, gelaugt wird;
c) die pH-Wert-Einstellung der Phosphorsäure und Natriumphosphat-Lösungen mit 10 bis 50 %iger, insbesondere 25 bis 35 %iger Natronlauge erfolgt;
d) im dritten Schritt ein pH-Wert von 1 eingestellt wird;
e) im vierten und fünften Schritt als Sulfid Phosphorpentasulfid und/oder Natriumsulfid in fester oder gelöster Form mit der 1 bis 3-fachen Menge, berechnet als stöchiometrische Menge des ausgefällten Metallsulfids, dosiert wird;
f) die Sulfidfällungen bei 20 bis 80°C, vorzugsweise bei 50 bis 70°C, insbesondere in Gegenwart von Filterhilfsmitteln, vorzugsweise von Kieselgur, erfolgen;
g) die Sulfidfällungen bei 20 bis 80°C in Gegenwart von Filterhilfsmitteln, insbesondere Kieselgur, abgetrennt werden;
h) im sechsten Schritt ein Molverhältnis von Na : P = 5 : 3 eingestellt wird und diese Natriumphosphatlösung zur Herstellung von Natriumtripolyphosphat eingesetzt wird;
i) im vierten Schritt gleichzeitig Blei, Kupfer, Cadmium und Zink bei einem pH-Wert von 1,7 bis 2,5, insbesondere 1,9 bis 2,1 als Sulfide gefällt werden;
j) die Stäube vor ihrer Calcinierung mit Waschwässern, die bei der Waschung der Sulfidniederschläge angefallen sind, angemaischt werden;
k) die im sechsten Schritt abgetrennten Calciumverbindungen in den Prozeß der elektrothermischen Phosphorherstellung zurückgeführt werden.

Mit dem erfindungsgemäßen Verfahren wird nunmehr eine Arbeitsweise erreicht, die es erlaubt, weitgehend die Phosphorbestandteile der Stäube wirtschaftlich in Alkaliphosphate umzuwandeln und die metallischen Verunreinigungen der Stäube zu deponiefähigen Blei-, Kupfer- und Cadmiumsulfid sowie Zinksulfid, das für die Zinkherstellung nutzbar ist, aufzuarbeiten.

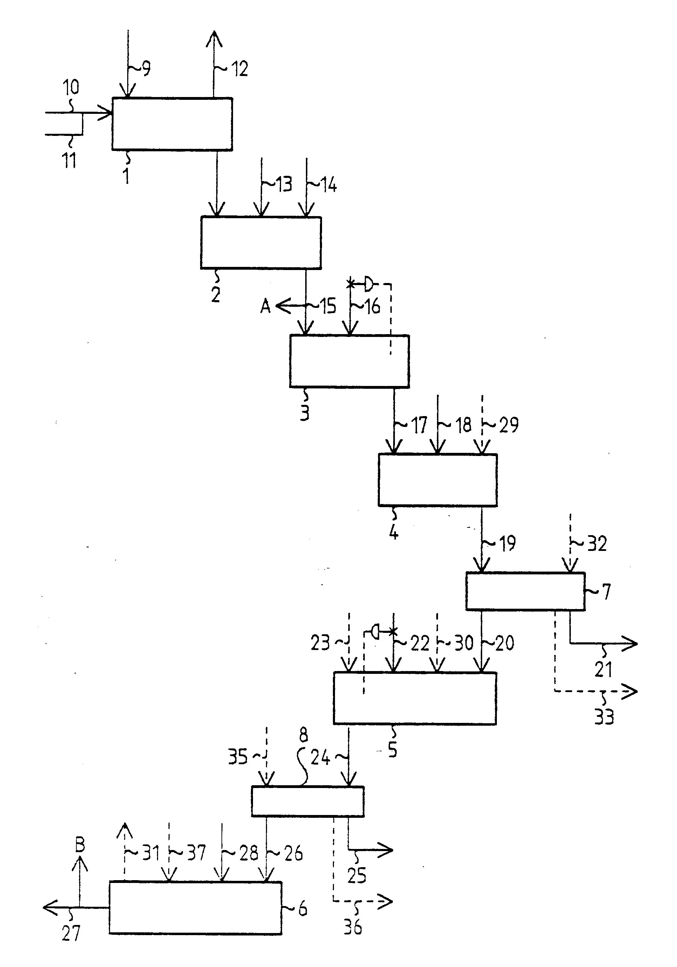

Das Verfahren gemäß der Erfindung wird anhand der beigefügten Zeichnung erläutert:
Die im Elektroabscheider abgeschiedenen Stäube werden in Wasser angemaischt, abfiltriert und gelangen als Filterkuchen über die Zuführung 9 in den Drehofen 1, der mittels eines Gasbrenners erhitzt wird. Der Gasbrenner wird über die Gaszuführung 10 mit Erdgas und über die Luftzuführung 11 gespeist. Über den Kamin 12 entweichen die Abgase. Die calcinierten oxidierten Stäube werden über die Schurre 13 in den gummierten Lösebehälter 2 gefördert. Über die Phosphorsäureleitung 14 wird die Phosphorsäure dosiert. Die bei der Laugung des Calcinates angefallene phosphorsaure Lösung gelangt über die Rohrleitung 15 in den Rührbehälter 3, nachdem vom Unlöslichen A, das in den Phosphorofen zurückgeführt wird, abgetrennt wurde. In den Rührbehälter 3 fließt die Natronlauge über die Natronlaugeleitung 16, automatisch nach dem pH-Wert gesteuert, ein. Die teilneutralisierte phosphorsaure Lösung wird über die Ablaufleitung 17 in dem Fällbehälter 4 zusammen mit dem durch den Rohrstutzen 18 dosierten Alkali- oder Phosphorsulfid verrührt. Eventuell wird über die Schurre 29 ein Filterhilfsmittel zugesetzt. Die Schwermetallsulfidsuspension wird über Rohrleitung 19 auf ein Drehfilter 7, das mit einer Precoatschicht überzogen ist, gefördert. Die abfiltrierten Blei-, Kupfer- und Cadmiumsulfide werden auf dem Drehfilter 7 mit Wasser 32 gewaschen und über den Austrag 21 abgezogen. Das Waschwasser steht über die Waschwasserleitung 33 zur Anmaischung der Stäube zur Verfügung. Die filtrierte, teilneutralisierte phosphorsaure Lösung fließt durch den Ablaufstutzen 20 in den Nachfällbehälter 5, in welchen Natronlauge, automatisch nach dem pH-Wert des Behälterinhaltes gesteuert, über die Natronlaugeleitung 22 einfließt. Zusätzliches Alkali- oder Phosphorsulfid wird über den Rohrstutzen 23, zusätzliches Filterhilfsmittel über die Schurre 30 eingeführt. Die Zinksulfidsuspension wird über die Rohrleitung 24 auf ein Drehfilter 8, das mit einer Precoatschicht überzogen ist, gefördert. Das abfiltrierte Zinksulfid wird nach einer Wasserwäsche 35 über den Austrag entnommen. Das Waschwasser steht über die Waschwasserleitung 36 ebenfalls zur Anmaischung der Stäube zur Verfügung. Die filtrierte Natriumphosphatlösung fließt durch den Ablaufstutzen 26 in den Neutralisationsbehälter 6. Nach der Ausblasung 37 der Natriumphosphatlösung zur Entfernung von überschüssigem Sulfid mit Luft - die Abluft entweicht über die Kaminleitung 31 - wird die für die Neutralisation benötigte Natronlaugemenge über die Natronlaugeleitung 28 zudosiert. Die anfallende Natriumphosphatsuspension wird aus dem Neutralisationsbehälter 6 entnommen und filtriert. Der Filterkuchen B wird in den Phosphorofen rückgeführt. Die resultierende Natriumphosphatlösung wird über den Ablauf 27 zur Natriumsalzproduktion abgezogen.

## Patentansprüche

1. Verfahren zur Aufarbeitung von Stäuben, die aus dem bei der elektrothermischen Herstellung von gelbem Phosphor anfallenden, im wesentlichen aus Kohlenmonoxid und Phosphordampf bestehenden Gasgemisch elektrostatisch abgeschieden wurden, dadurch gekennzeichnet, daß die Stäube in einem ersten Schritt bei 300 bis 800°C unter oxidierenden Bedingungen in ein Calcinat überführt werden, in einem zweiten Schritt das Calcinat mit Phosphorsäure gelaugt wird, in einem dritten Schritt die phosphorsaure Lösung mit Natronlauge auf einen pH-Wert von 0 bis 1,5 eingestellt wird, in einem vierten Schritt aus der teilweise neutralisierten phosphorsauren Lösung durch Zugabe von Sulfid die Sulfide des Bleis, Kupfers und Cadmiums ausgefällt und abfiltriert werden, in einem fünften Schritt die filtrierte, teilweise neutralisierte phosphorsaure Lösung mit Natronlauge auf einen pH-Wert von ca. 1,5 bis 5,0 eingestellt wird und, gegebenenfalls unter Zugabe weiterer Sulfidmengen, Zinksulfid ausgefällt und abfiltriert wird, in einem sechsten Schritt die Natriumphosphatlösung, gegebenenfalls nach Austreiben überschüssigen Sulfids, mit Natronlauge weiter neutralisiert und von ausgefallenen Calciumverbindungen abgetrennt wird, und die resultierende Natriumphosphatlösung in dieser Form in bekannter Weise zur Herstellung von Natriumphosphatsalzen verwendet wird.

2. Verfahren nach Anspruch 1, dadurch gekennzeichnet, daß das Calcinat der Stäube mit durch Phosphorverbrennung gewonnener Phosphorsäure oder entsulfatisierter Naßphosphorsäure mit 10 bis 54 Gew%, vorzugsweise 25 bis 35 Gew% P₂O₅ in der 5 bis 20-fachen, vorzugsweise 10 bis 15-fachen Gewichtsmenge gelaugt wird.

3. Verfahren nach Anspruch 1 oder 2, dadurch gekennzeichnet, daß das Calcinat mit der Phosphorsäure bei 20 bis 100°C, vorzugsweise 70 bis 80°C, innerhalb von 0,5 bis 4 Stunden, vorzugsweise 2 bis 3 Stunden, gelaugt wird.

4. Verfahren nach mindestens einem der voranstehenden Ansprüche, dadurch gekennzeichnet, daß die pH-Wert-Einstellung der Phosphorsäure und Natriumphosphat-Lösungen mit 10 bis 50 %iger, insbesondere 25 bis 35 %iger Natronlauge erfolgt.

5. Verfahren nach mindestens einem der voranstehenden Ansprüche, dadurch gekennzeichnet, daß im dritten Schritt ein pH-Wert von 1 eingestellt wird.

6. Verfahren nach mindestens einem der voranstehenden Ansprüche, dadurch gekennzeichnet, daß im vierten und fünften Schritt als Sulfid Phosphorpentasulfid und/oder Natriumsulfid in fester oder gelöster Form mit der 1 bis 3-fachen Menge, berechnet als stöchiometrische Menge des ausgefällten Metallsulfids, dosiert wird.

7. Verfahren nach mindestens einem der voranstehenden Ansprüche, dadurch gekennzeichnet, daß die Sulfidfällungen bei 20 bei 80°C, vorzugsweise bei 50 bis 70°C, insbesondere in Gegenwart von Filterhilfsmitteln, vorzugsweise von Kieselgur, erfolgen.

8. Verfahren nach mindestens einem der voranstehenden Ansprüche, dadurch gekennzeichnet, daß die Sulfidfällungen bei 20 bis 80°C in Gegenwart von Filterhilfsmitteln, insbesondere Kieselgur, abgetrennt werden.

9. Verfahren nach mindestens einem der voranstehenden Ansprüche, dadurch gekennzeichnet, daß im sechsten Schritt ein Molverhältnis von Na : P = 5 : 3 eingestellt wird und diese Natriumphosphatlösung zur Herstellung von Natriumtripolyphosphat eingesetzt wird.

10. Verfahren nach mindestens einem der voranstehenden Ansprüche, dadurch gekennzeichnet, daß im vierten Schritt gleichzeitig Blei, Kupfer, Cadmium und Zink bei einem pH-Wert von 1,7 bis 2,5, insbesondere 1,9 bis 2,1, als Sulfide ausgefällt werden.

11. Verfahren nach mindestens einem der voranstehenden Ansprüche, dadurch gekennzeichnet, daß die Stäube vor ihrer Calcinierung mit Waschwässern die bei der Waschung der Sulfidniederschläge angefallen sind, angemaischt werden.

12. Verfahren nach mindestens einem der voranstehenden Ansprüche, dadurch gekennzeichnet, daß die im sechsten Schritt abgetrennten Calciumverbindungen in den Prozeß der elektrothermischen Phosphorherstellung zurückgeführt werden.

## Claims

1. A process for working up dusts which have been precipitated electrostatically from the gas mixture composed essentially of carbon monoxide and phosphorus vapor produced in the electrothermal production of yellow phosphorus, which process comprises converting the dusts into a calcinate at 300 to 800°C under oxidizing conditions in a first step, leaching the calcinate with phosphoric acid in a second step, adjusting the pH of the solution in phosphoric acid to 0 to 1.5 with sodium hydroxide solution in a third step, precipitating the sulfides of lead, copper and cadmium from the partially neutralized solution in phosphoric acid by adding sulfide and filtering them off in a fourth step, adjusting the pH of the filtered, partially neutralized solution in phosphoric acid to about 1.5 to 5.0 with sodium hydroxide solution and precipitating zinc sulfide, if necessary by adding further quantities of sulfide, and filtering it off in a fifth step, further neutralizing the sodium phosphate solution, if necessary after expelling excess sulf-ide, with sodium hydroxide solution and separating it from precipitated calcium compounds in a sixth step, and using the resultant sodium phosphate solution in this form in a known manner to produce sodium phosphate salts.

2. The process as claimed in claim 1, wherein the calcinate of the dusts is leached with phosphoric acid produced by combustion of phosphorus or desulfatized wet phosphoric acid containing 10 to 54% by weight, preferably 25 to 35% by weight, of P₂O₅ in a quantity by weight of 5 to 20 times, preferably of 10 to 15 times.

3. The process as claimed in claim 1 or 2, wherein the calcinate is leached with phosphoric acid at 20 to 100°C, preferably 70 to 80°C, for from 0.5 to 4 hours, preferably 2 to 3 hours.

4. The process as claimed in at least one of the preceding claims, wherein the pH of the phosphoric acid and sodium phosphate solutions is adjusted with 10 to 50%, in particular 25 to 35%, sodium hydroxide solution.

5. The process as claimed in at least one of the preceding claims, wherein, in the third step, the pH is adjusted to 1.

6. The process as claimed in at least one of the preceding claims, wherein, in the fourth and fifth step, a measured amount of phosphorus pentasulfide or sodium sulfide is added in solid or dissolved form as the sulfide in 1 to 3 times the quantity, calculated as the stoichiometric quantity of the precipitated metal sulfide.

7. The process as claimed in at least one of the preceding claims, wherein the sulfides are precipitated at 20 to 80°C, preferably at 50 to 70°C, in particular in the presence of filtering aids, preferably of kieselguhr.

8. The process as claimed in at least one of the preceding claims, wherein the sulfide precipitates are separated at 20 to 80°C in the presence of filtering aids, in particular kieselguhr.

9. The process as claimed in at least one of the preceding claims, wherein, in the sixth step, the molar ratio is adjusted to Na : P = 5 : 3 and this sodium phosphate solution is used to produce sodium tripolyphosphate.

10. The process as claimed in at least one of the preceding claims, wherein, in the fourth step, lead, copper, cadmium and zinc are precipitated simultaneously as sulfides at a pH of 1.7 to 2.5, in particular 1.9 to 2.1.

11. The process as claimed in at least one of the preceding claims, wherein, before they are calcined, the dusts are mashed with wash waters which have been produced in washing the sulfide precipitates.

12. The process as claimed in at least one of the preceding claims, wherein the calcium compounds separated in the sixth step are returned to the electrothermal phosphorus production process.

## Revendications

1. Procédé pour le traitement de poussières qui ont été séparées par précipitation électrostatique du mélange gazeux consistant essentiellement en monoxyde de carbone et vapeur de phosphore se formant dans la fabrication électrothermique du phosphore blanc, caractérisé en ce que dans une première étape, les poussières sont transformées à 300-800°C en conditions oxydantes en un produit calciné, dans une seconde étape, le produit calciné est extrait par l'acide phosphorique, dans une troisième étape la solution phosphorique est ajustée par la lessive de soude à un pH de 0 à 1,5, dans une quatrième étape on précipite de la solution phosphorique partiellement neutralisée les sulfures de plomb, de cuivre et de cadmium par addition de sulfure et on les sépare par filtration, dans une cinquième étape, cette solution phosphorique partiellement neutralisée, filtrée est ajustée par la lessive de soude à un pH d'environ 1,5 à 5,0 et éventuellement avec addition de nouvelles quantités de sulfure, on précipite et on filtre le sulfure de zinc, dans une sixième étape la solution de phosphate de sodium est encore neutralisée par la lessive de soude éventuellement après séparation du sulfure en excès et séparée des composés de calcium précipités et la solution de phosphate de sodium résultante est utilisée sous cette forme de manière connue pour la fabrication de phosphates de sodium.

2. Procédé selon la revendication 1, caractérisé en ce que le produit calciné des poussières est extrait par l'acide phosphorique obtenu par combustion du phosphore ou l'acide phosphorique désulfaté du procédé par voie humide à 10-54 % en poids de P₂O₅, de préférence 25 à 35 % en poids, en quantité de 5 à 20 fois en poids, de préférence de 10 à 15 fois en poids.

3. Procédé selon la revendication 1 ou 2, caractérisé en ce que le produit calciné est extrait par l'acide phosphorique à 20-100°C, de préférence 70 à 80°C en 0,5 à 4 h, de préférence 2 à 3 h.

4. Procédé selon l'une au moins des revendications précédentes, caractérisé en ce que le réglage du pH de l'acide phosphorique et des solutions en phosphate de sodium s'effectue par la lessive de soude à 10-50 %, en particulier à 25-35 %.

5. Procédé selon l'une au moins des revendications précédentes, caractérisé en ce que dans la troisième étape, on ajuste un pH de 1.

6. Procédé selon l'une au moins des revendications précédentes, caractérisé en ce que dans la quatrième et la cinquième étapes, on dose comme sulfure le pentasulfure de phosphore et/ou le sulfure de sodium sous forme solide ou dissoute en quantité de 1 à 3 fois la quantité stoechiométrique du sulfure métallique précipité.

7. Procédé selon l'une au moins des revendications précédentes, caractérisé en ce que les précipitations des sulfures s'effectuent à 20-80°C, de préférence à 50-70°C, en particulier en présence d'auxiliaires de filtration, de préférence la terre d'infusoires.

8. Procédé selon l'une au moins des revendications précédentes, caractérisé en ce que les précipités de sulfures sont séparés à 20-80°C en présence d'auxiliaires de filtration, en particulier la terre d'infusoires.

9. Procédé selon l'une au moins des revendications précédentes, caractérisé en ce que dans la sixième étape, on ajuste un rapport molaire Na/P de 5 : 3 et cette solution de phosphate de sodium est utilisée pour la fabrication de tripolyphosphate de sodium.

10. Procédé selon l'une au moins des revendications précédentes, caractérisé en ce que dans la quatrième étape, le plomb, le cuivre, le cadmium et le zinc sont précipités en même temps à l'état de sulfures à un pH de 1,7 à 2,5, en particulier de 1,9 à 2,1.

11. Procédé selon l'une au moins des revendications précédentes, caractérisé en ce que les poussières sont délayées avant leur calcination avec des eaux de lavage qui sont obtenues dans le lavage des précipités de sulfures.

12. Procédé selon l'une au moins des revendications précédentes, caractérisé en ce que les composés de calcium séparés dans la sixième étape sont recyclés dans le procédé de la fabrication électrothermique du phosphore.
